# EUROPEAN PATENT APPLICATION

(11) **EP 4 674 698 A1**
(43) Date of publication of application: **07.01.2026**
(21) Application number: 25181751.6
(22) Date of filing: 10.06.2025
(51) Int. Cl.: B60T 1/08, B60L 7/26, B60T 1/10, B60T 7/04, B60W 30/18

(54) **SYSTEM AND METHOD FOR COORDINATING BRAKING SYSTEMS OF A VEHICLE**

(30) Priority: 02.07.2024 SE 2450749
(71) Applicant: Volvo Truck Corporation, 405 08 Göteborg (SE)
(72) Inventor: HENDERSON, Leon, HÄRRYDA (SE); VIKSTRÖM, Carl Anders, GÖTEBORG (SE); PROKES, Jakub, GÖTEBORG (SE)
(74) Representative: Ström & Gulliksson AB

(57) **Abstract**

A computer system for coordinating braking between a service brake system and one or more auxiliary braking systems of a vehicle, the computer system comprising processing circuitry configured to: receive a braking force value based on the position of a brake pedal of the vehicle, the braking force value comprising a braking force currently applied by the service brake system or a requested braking force for the service brake system; acquire a braking capability of the one or more auxiliary braking systems; determine a respective braking control input for each of the service brake system and the one or more auxiliary braking systems based on the acquired braking capability and the received braking force value, such that a resultant braking force applied by the service brake system based on the respective determined braking control input is less than or equal to the received braking force value; and transmit the respective control inputs to each of the service brake system and the one or more auxiliary braking systems.

## Description

### TECHNICAL FIELD

The disclosure relates generally to vehicle motion management. In particular aspects, the disclosure relates to systems and methods for coordinating braking systems of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Brake blending is a process of coordinating braking between a service brake system and one or more auxiliary braking systems in internal combustion engine vehicles, hybrid and electric vehicles, in order to optimize energy use, ensure smooth deceleration, and enhance vehicle safety. While the service brake system ensures driver control and provides consistent and reliable braking performance, the auxiliary braking systems such as regenerative braking systems, engine brake systems, and retarder brake systems enhance the overall braking performance and reduce wear on the service brakes.

Due to high safety requirements associated with braking response when the brake pedal is pressed, a direct link between brake pedal and the service braking system is required. As a consequence, when braking is performed in response to an operator pressing the brake pedal, the brake blending functionality that is utilized is currently allocated to the service brake system. In contrast, when other use cases of braking are performed, such as automatic braking functions, the brake blending functionality is typically allocated to a central vehicle motion controller. This requires significant infrastructure and complex control schemes.

It is therefore desired to provide systems, methods and other approaches that attempt to resolve or at least mitigate one or more of these issues.

### SUMMARY

This disclosure provides systems and methods for enabling centralized coordination of braking systems in a vehicle without compromising safety. In particular, the disclosure enables coordination of braking between a service brake system and one or more auxiliary braking systems of a vehicle for braking situations, while preserving the direct link between the brake pedal and executed braking force.

According to a first aspect of the disclosure, there is provided a computer system for coordinating braking between a service brake system and one or more auxiliary braking systems of a vehicle, the computer system comprising processing circuitry configured to receive a braking force value based on the position of a brake pedal of the vehicle, the braking force value comprising a braking force currently applied by the service brake system or a requested braking force for the service brake system acquire a braking capability of the one or more auxiliary braking systems, determine a respective braking control input for each of the service brake system and the one or more auxiliary braking systems based on the acquired braking capability and the received braking force value, such that a resultant braking force applied by the service brake system based on the respective determined braking control input is less than or equal to the received braking force value; and transmit the respective control inputs to each of the service brake system and the one or more auxiliary braking systems.

The first aspect of the disclosure may seek to provide a computer system that improves coordination of braking between a service brake system and one or more auxiliary braking systems of a vehicle, by enabling centralized coordination for all braking situations while preserving a direct link between a brake pedal input and an executed braking force. A technical benefit may include that the efficiency and complexity of the control architecture for braking coordination in the vehicle can be improved while safety and braking performance is ensured. By coordinating braking between the service brake system and the one or more auxiliary braking systems of the vehicle using one central vehicle motion controller for all use cases without compromising safety with regards to brake pedal-initiated braking, the efficiency, safety and overall complexity of the brake blending control architecture is improved.

Optionally in some examples, including in at least one preferred example, the processing circuitry is configured to receive the braking force value from a controller of the service brake system. A technical benefit may include that a direct link between the brake pedal and the service brake system provides a robustness to any failures affecting the system for coordinating braking and enables compliance with safety regulations by providing a consistent braking performance.

Optionally in some examples, including in at least one preferred example, the processing circuitry is configured to acquire each braking capability from a controller of each of the one or more auxiliary braking systems. A technical benefit may include that, by understanding the braking capabilities of each auxiliary system, the system can better coordinate the braking between the service and auxiliary brakes, ensuring optimal braking performance and efficiency.

Optionally in some examples, including in at least one preferred example, the processing circuitry is further configured to determine the respective braking control inputs such that a total resultant braking force applied by the service brake system and the one or more auxiliary braking systems based on the determined braking control inputs is equal to the received braking force value. A technical benefit may include that the braking force requested though the braking force value is obtained with improved efficiency and reduced wear on the service brakes.

Optionally in some examples, including in at least one preferred example, the processing circuitry is further configured to determine the respective braking control inputs such that a total resultant braking force applied by the service brake system and the one or more auxiliary braking systems based on the determined braking control inputs is less or more than the received braking force value. A technical benefit may include that the total resultant braking force may further be determined to account for conditions of the brake systems or the vehicle. This may require a resultant braking force that is more than the received braking force value in certain situations, or less than the received braking force value in other situations.

Optionally in some examples, including in at least one preferred example, the processing circuitry is further configured to determine the respective braking control inputs based on acquired input from a system for automated or assisted driving. A technical benefit may include increased safety, as the computer system may further adjust the resultant braking force based on detected hazards or perceived driver braking intention.

Optionally in some examples, including in at least one preferred example, the processing circuitry is further configured to determine the respective braking control inputs based on acquired parameters relating to vehicle stability, brake conditions and/or predicted brake actuator response. A technical benefit may include increased safety and braking performance.

Optionally in some examples, including in at least one preferred example, the processing circuitry is further configured to determine the respective braking control inputs based on a minimum braking force requirement for the service brake system. A technical benefit may include increased safety as it is ensured that at least a part of the received braking force value will always be allocated to the service brake system.

Optionally in some examples, including in at least one preferred example, the processing circuitry is further configured to implement the minimum braking force requirement for the service brake system by applying a limit to the braking capability of the one or more auxiliary braking systems. A technical benefit may include increased safety, as at least a part of the received braking force value will always be allocated to the service brake system regardless of the braking capability of the auxiliary braking systems.

Optionally in some examples, including in at least one preferred example, the processing circuitry is further configured to receive the braking capability as a negative value and determine the braking control inputs by adding the negative value to the currently applied braking force, and/or receive the braking capability as a positive value and determine the braking control inputs by subtracting the positive value from the currently applied braking force. A technical benefit may include that the computer system may be implemented in existing interfaces for braking requests while maintaining backwards compatibility.

Optionally in some examples, including in at least one preferred example, the one or more auxiliary braking systems comprises a regenerative braking system, an engine brake system, and/or a retarder brake system. A technical benefit may include the provision of improved braking performance under various conditions and various vehicle configurations, as it is ensured that braking capability of different types of auxiliary braking systems may be used in the coordination of braking systems.

According to a second aspect of the disclosure, there is provided a vehicle comprising the computer system of any preceding claim. The second aspect of the disclosure may seek to provide a vehicle capable of centralized coordination of braking systems for all braking situations, by utilizing the computer system to coordinate braking between a service brake system and one or more auxiliary braking systems. A technical benefit may include that the efficiency and complexity of the control architecture for braking coordination in the vehicle can be improved while safety and braking performance is ensured, as a direct link between a brake pedal input and executed braking force in the vehicle is maintained.

According to a third aspect of the disclosure, there is provided a computer-implemented method for coordinating braking between a service brake system and one or more auxiliary braking systems of a vehicle, the method comprising: receiving a braking force currently applied by the service brake system based on the position of a brake pedal of the vehicle, acquiring a braking capability of the one or more auxiliary braking systems, determining a respective braking control input for each of the service brake system and the one or more auxiliary braking systems based on the acquired braking capability and the received braking force, such that a resultant braking force applied by the service brake system based on the respective determined control input is less than or equal to the received braking force, and transmitting the respective control inputs to each of the service brake system and the one or more auxiliary braking systems.

The third aspect of the disclosure may seek to improve the coordination of braking between a service brake system and one or more auxiliary braking systems of a vehicle, by enabling centralized coordination for all braking situations while preserving a direct link between a brake pedal input and the executed braking force. A technical benefit may include that the efficiency and complexity of the control architecture for braking coordination in the vehicle can be improved while safety and braking performance is ensured.

According to a fourth aspect of the disclosure, there is provided a computer program product comprising program code for performing, when executed by the processing circuitry, the computer-implemented method of the third aspect. The fourth aspect of the disclosure may seek to enable new vehicles and/or legacy vehicles to be conveniently configured, by software installation/update, to centrally coordinate braking between a service brake system and one or more auxiliary braking systems of a vehicle for all braking situations while preserving a direct link between a brake pedal input and the executed braking force. A technical benefit may include that efficiency and complexity of the control architecture for braking coordination in the vehicle can be improved while safety and braking performance is ensured.

According to a fifth aspect of the disclosure, there is provided a non-transitory computer-readable storage medium comprising instructions, which when executed by the processing circuitry, cause the processing circuitry to perform the computer-implemented method of the third aspect. The fifth aspect of the disclosure may seek to enable new vehicles and/or legacy vehicles to be conveniently configured, by software installation/update, to centrally coordinate braking between a service brake system and one or more auxiliary braking systems of a vehicle for all braking situations while preserving a direct link between a brake pedal input and the executed braking force. A technical benefit may include that efficiency and complexity of the control architecture for braking coordination in the vehicle can be improved while safety and braking performance is ensured.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates a vehicle according to an example.
**FIG. 2** is an signalling diagram according to an example.
**FIG. 3** is flow chart of a computer-implemented method according to an example.
**FIG. 4** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

In the context of heavy-duty vehicles, the braking system is a critical component that ensures the safety and operational efficiency of the vehicle. While the service brake system ensures driver control and provides consistent and reliable braking performance, relying solely on service brakes can lead to excessive wear and increased maintenance costs and may not provide the most efficient or safe braking performance. Therefore, heavy-duty vehicles today typically rely on a combination of service brakes and auxiliary braking systems to achieve the desired deceleration and stopping performance by implementing advanced brake blending strategies. Brake blending is a process of coordinating braking between a service brake system and one or more auxiliary braking systems such as a regenerative braking system, an engine brake system, and/or a retarder brake system, in order to optimize energy use, ensure smooth deceleration, and enhance vehicle safety.

Despite its benefits, implementing effective brake blending in heavy-duty vehicles presents several challenges. Due to high safety requirements associated with braking response during pedal initiated braking, a direct link between the brake pedal and the service braking system of the vehicle is required. As a consequence, the brake blending functionality that is utilized when braking is performed based on an operator pressing the brake pedal is currently allocated to the service brake system, while the brake blending functionality for other use cases, such as automatic braking functions, is typically allocated to a central vehicle motion controller. Thereby, the control of different systems must be handled separately, which requires significant infrastructure and complex control schemes.

To remedy this, systems and methods are proposed for coordinating braking between a service brake system and one or more auxiliary braking systems of a vehicle. The computer system receives a braking force value based on the position of a brake pedal of the vehicle and acquires a braking capability of the one or more auxiliary braking systems. Based on the acquired braking capability and the received braking force value, the computer system determines a respective braking control input for each of the service brake system and the one or more auxiliary braking system, such that a resultant braking force applied by the service brake system is less than or equal to the received braking force value and transmits the respective control inputs to each of the service brake system and the one or more auxiliary braking systems. In this way, one central system for coordination of braking between the service brake system and the auxiliary braking systems is obtained, while the direct link between brake pedal and executed braking force is preserved. By implementing the coordination of braking in one controller without compromising safety with regards to brake pedal-initiated braking, the efficiency and overall complexity of the brake blending control architecture is improved while safety and braking performance is maintained.

It should be noted that the term braking force used throughout the application may also be interpreted as normalized braking force, i.e. braking force divided by vehicle mass.

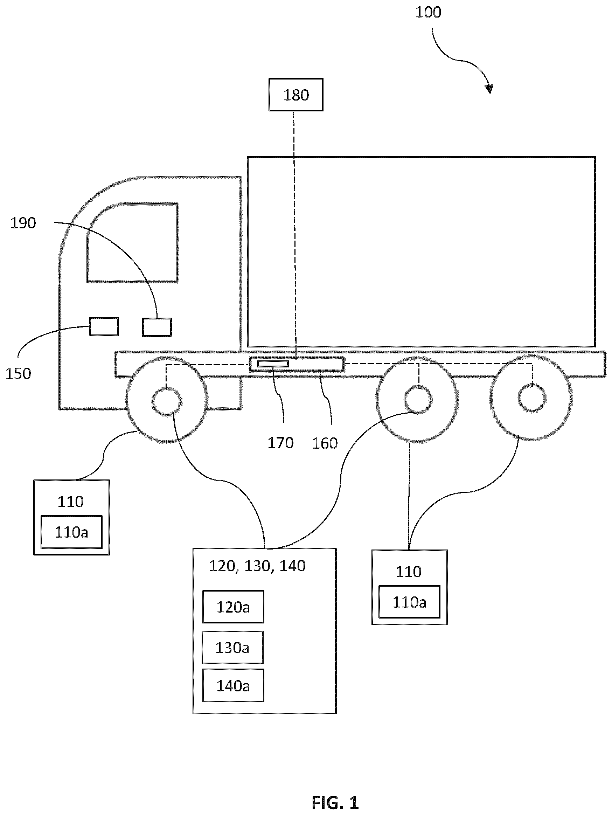

**FIG. 1** shows a side view of an example vehicle **100** of the type considered in this disclosure. The vehicle **100** may be any suitable form of vehicle comprising a service brake system **110** and one or more auxiliary brake systems **120, 130, 140.** For example, the disclosure can be applied in heavy-duty vehicles, such as trucks, buses, construction equipment, and multi-unit vehicle combinations.

The service brake system **110** of the vehicle **100** can supply a negative (braking) force. The service brake system **110** may be, for example, frictional brakes such as pneumatic brakes or hydraulic brakes, and provides powerful braking capability and reliability. The service brake system **110** is controlled by a controller **110a,** either based on input from the position of the brake pedal **150** through interaction from a driver, or based on input from a computer system such as system for automated or assisted driving (for example implemented by computer systems **160, 180,** discussed below).

The vehicle **100** may further comprise one or more sources of propulsion (not shown). For example, the vehicle **100** may comprise one or more electrical machines such as electric motors and/or generators. In some examples, the vehicle **100** may also include another source of propulsion (not shown), for example an internal combustion engine (ICE). The vehicle **100** also comprises a drivetrain (not shown) to deliver mechanical power from the propulsion source (the electrical machines or the ICE) to the wheels.

The electrical machines can supply either a positive (propulsion) or negative (braking) force. During deceleration or braking, an electric machine reverses its function and acts as a generator. Instead of consuming electrical energy to create motion, it converts the vehicle's kinetic energy into electrical energy. The use of electrical machines to supply a negative force is known as regenerative braking, whereby the electrical machines function as a regenerative braking system **120.** The generated electrical energy is then stored in an energy storage system of the vehicle while the demand on the service brake system **110** is reduced, leading to less wear and tear and lower maintenance costs.

The ICE may also be used to supply a negative (braking force), while acting as an engine brake system **130.** Engine braking occurs when the retarding forces within the ICE are used to slow down the vehicle **100,** typically by either momentarily opening the exhaust valve near the top of the compression stroke to release compressed air, turning the engine into an air compressor and creating resistance, or partially closing a valve in the exhaust system to create back pressure, which slows the engine and the vehicle.

The vehicle **100** may further comprise a retarder brake system **140,** for example hydraulic retarders or electric retarders, to provide additional braking force and help to control the vehicle's speed, especially during long downhill descents or in heavy traffic situations.

The vehicle **100** further includes a computer system **160** comprising processing circuitry **170.** The computer system **160** is configured to control vehicle operation, for example by coordinating braking between the braking systems **110, 120, 130, 140.** The computer system **160** is communicatively coupled to a respective controller **110a, 120a, 130a, 140a** of the braking systems **110, 120, 130, 140,** allowing the computer system **160** to communicate with the braking system controllers **110a, 120a, 130a, 140a** and thereby control vehicle braking.

The computer system **160** may also be configured to implement a system for automated or assisted driving. This system may comprise an array of sensors, data processing algorithms, and control mechanisms to assist human drivers or fully automate driving tasks, on order to reduce accidents caused by human error, enhance driving comfort, and optimize vehicle efficiency.

The computer system **160** may be local to the vehicle **100,** or may be a remote system **180,** implemented at a distance from the vehicle **100.** Computer system **180** is implemented in a similar way as computer system **160.** Whilst not shown, computer system **180** and the various controllers **110a, 120a, 130a, 140a** may also comprise processing circuitry configured to implement their respective functions..

When controlling the braking of a heavy-duty vehicle, it is usually desirable to combine the service brakes and auxiliary braking systems in order to ensure smooth deceleration, optimize energy use, and enhance vehicle safety. Therefore, different approaches to brake blending have been implemented in modern vehicles. However, the regulations and safety requirements related to braking when the driver presses the brake pedal have made it difficult to provide a system wherein one controller is used for coordination of braking systems in all braking situations. To remedy this, systems and methods are proposed for enabling one controller to coordinate braking between the service brake system **110** and one or more auxiliary braking systems **120, 130, 140** of a vehicle **100.**

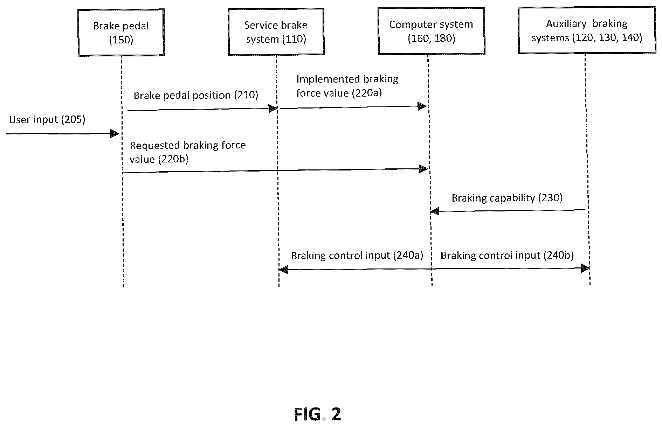

**FIG. 2** shows a signalling diagram between different systems of the vehicle **100 of** **FIG. 1****,** according to an example. The diagram shows that a driver makes an input **205** to the brake pedal **150,** resulting in a position **210** of the brake pedal **150.** The position **210** of the brake pedal **150** is sent to the service brake system **110.** The service brake system **110** may then communicate a braking force value **220a** based on the position of the brake pedal to the computer system **160, 180.** The braking force value **220a** is an implemented braking force value **220a** that is currently being applied by the service brake system **110.** Additionally or alternatively, the input to the brake pedal **150** is sent as a braking force value **220b** directly to the computer system **160, 180,** wherein the braking force value **220b** is a requested braking force value **220b** for the service brake system **110.**

The signalling diagram further shows that the computer system **160, 180** is configured to acquire a braking capability **230** of the one or more auxiliary braking systems **120, 130, 140.** The braking capability **230** of each auxiliary braking system **120, 130, 140** is communicated from a respective controller **120a, 130a, 140a** of the auxiliary braking systems **120, 130, 140.** Based on the acquired braking capability **230** and the received braking force value **220,** the computer system **160, 180** determines a respective braking control input **240a, 240b** for each of the service brake system **110** and the one or more auxiliary braking systems **120, 130, 140.** The braking control input **240b** may comprise a respective braking control input for each of the auxiliary braking systems **120, 130, 140.** The computer system **160, 180** then transmits the respective control inputs **240a, 240b** to each of the brake systems.

The braking control inputs **240a, 240b** are determined such that the resultant braking force applied by the service brake system **110** is less than or equal to the received braking force value **220.** In this way, the braking force applied by the service brake system **110** may be reduced based on the braking capability of the auxiliary braking systems **120, 130, 140.** For example, if the auxiliary braking systems **120, 130, 140** have the capability to provide a certain braking force, the braking control input **240b** for the auxiliary braking systems **120, 130, 140** may be determined to allocate some of the requested braking force to the auxiliary braking systems **120, 130, 140.** At the same time, the braking control input **240a** for the service brake system **110** is determined to reduce the braking force applied by the service brake system **110.** If, on the other hand, the auxiliary braking systems **120, 130, 140** do not have the capability to provide any braking force, the braking control inputs **240a, 240b** are determined such that the braking force applied by the service brake system is unchanged. Thereby, the wear of the service brake system **110** may be reduced while the link between the brake pedal and the executed braking force is maintained, which is important to fulfil regulation and safety requirements as well as to provide a user experience of a fast braking response when the driver pressing the brake pedal.

The braking control inputs **240a, 240b** may further be determined such that a total resultant braking force applied by both the service brake system **110** and the one or more auxiliary braking systems **120, 130, 140** is equal to the received braking force value. This ensures that the initially received braking force value is achieved while the benefits of both the service brake system **110** and the auxiliary braking systems **120, 130, 140** is utilized.

Optionally, the braking control inputs **240a, 240b** may be determined such that a total resultant braking force applied by both the service brake system **110** and the one or more auxiliary braking systems **120, 130, 140** is less or more than the received braking force value. This may be beneficial in situations where additional parameters affect the desired braking performance of the vehicle **100,** apart from brake pedal position. For example, the computer system **160, 180** may acquire input from the system for automated or assisted driving, which may detect hazards indicating that more braking force than the received braking force value is required. In other situations, acquired parameters relating to vehicle stability may indicate that steerability should be prioritized over braking. For example, if the vehicle **100** is about to jack-knife or skid, less braking force than the received braking force value may be required. Brake conditions such as overheating brakes and/or a predicted slow brake actuator response may also result in that less braking force than the received braking force value would be beneficial.

For increased safety, the control inputs **240a, 240b** may further be determined based on a minimum braking force requirement for the service brake system **110.** The minimum braking force requirement may be implemented by applying a limit to the braking capability. Thereby, it is ensured that some braking force will always be allocated to the service brake system **110.**

The computer system **160, 180** may receive the braking capability **230** as a negative value and determine the braking control inputs **240a, 240b** by adding the negative value to the received braking force value **220.** This is enabled by updating existing braking request interfaces to be able to handle negative values, as they are typically configured to handle requests in the range of 0-1. Optionally, the braking capability **230** may be received as a positive value and the braking control inputs **240a, 240b** determined by subtracting the positive value from the received braking force value **220.** This may be beneficial for backwards compatibility with existing braking request interfaces.

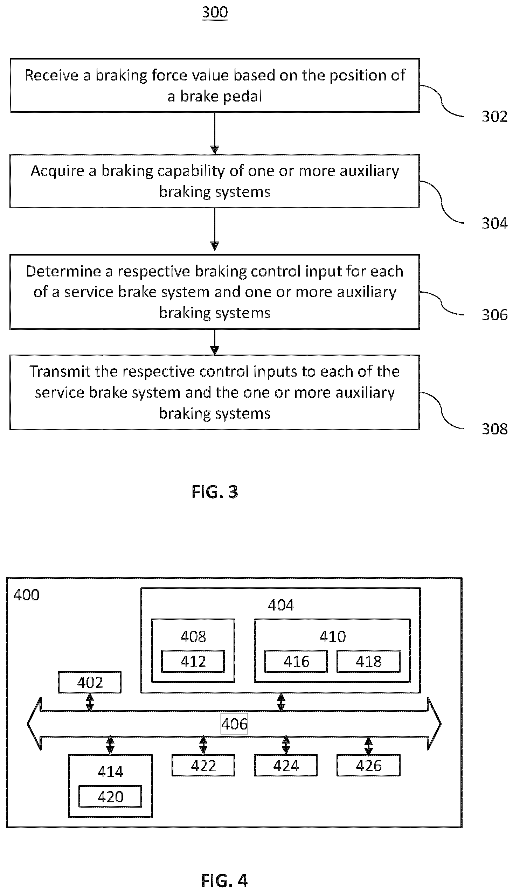

**FIG. 3** is a flow chart of a computer-implemented method **300** according to an example. The method **300** is for coordinating braking between a service brake system and one or more auxiliary braking systems of a vehicle, such as the vehicle **100.** The method may be implemented by processing circuitry of a computer system (e.g., the processing circuitry **170** of computer system **160**), or processing circuitry of computer system **180** described in relation to **FIG. 1****.**

At **302** a braking force value **220** based on the position of a brake pedal is received. The braking force value **220** may comprising a braking force currently applied **220a** by the service brake system **110** or a requested braking force **220b** for the service brake system **110.** As discussed above, the processing circuitry is configured to receive the braking force value **220** based on the position **210** of the brake pedal **150** of the vehicle, based on user input **205.** The computer system may receive the braking force value **220** from the service brake system **110,** or directly from the brake pedal **150.**

At **304,** a braking capability of one or more auxiliary braking systems **120, 130, 140** is acquired. The braking capability may be received as a braking torque or a braking force. The braking capability is typically dynamic, dependent on e.g. operating speed and temperature. A limitation may be applied to the braking capability to account for vehicle stability risks or brake conditions. The braking capability is acquired from a controller **120a, 130a, 140a** of each of the one or more auxiliary braking systems **120, 130, 140.**

At **306,** a respective braking control input for each of a service brake system **110** and one or more auxiliary braking systems **120, 130, 140** is determined, based on the acquired braking capability and the received braking force value **220.** The braking control inputs are determined such that a resultant braking force applied by the service brake system **110** based on the respective determined control input is less than or equal to the braking force value received at **302.** In this way the braking force requested though the braking force value **220** is obtained with improved efficiency and reduced wear on the service brakes.

In some embodiments, the braking control inputs are determined such that a total resultant braking force applied by the service brake system **110** and the one or more auxiliary braking systems **120, 130, 140** is equal to the received braking force. In this way, the braking force requested though the braking force value is obtained with improved efficiency and reduced wear on the service brakes.

In some embodiments, the braking control inputs are determined such that a total resultant braking force applied by the service brake system **110** and the one or more auxiliary braking systems **120, 130, 140** is less or more than the received braking force value. In this way, the total resultant braking force may take vehicle or brake conditions into account. For example, by applying the limitation to the braking capability, the resultant force will be less than the received braking force value, to account for vehicle instability. On the other hand, by reducing the requested braking force from the service brake system **110** with a value less than the braking force allocated to the auxiliary braking systems, the resultant force will be more than the received braking force value, e.g. to account for a predicted slow actuator response.

At **308,** the respective control **240a, 240b** inputs are transmitted to each of the service brake system **110** and the one or more auxiliary braking systems **120, 130, 140,** from the computer system **160, 180** to the controllers **110a, 120a, 130a, 140a** of each of the braking systems **110, 120, 130, 140.** In this way, the braking force requested through the position of the brake pedal **210** is coordinated between each of the service brake system **110** and the one or more auxiliary braking systems **120, 130, 140,** whereby wear on the service brakes is reduced while braking performance and vehicle safety is maintained.

The method **300** enables coordination between braking systems while maintaining the direct link between brake pedal and service brake system, thereby allowing a controller that is allocated outside of the service brake system to perform the braking coordination for all braking situations, without compromising safety. This means that both vehicle braking performance as well as the control architecture for performing the coordination of the braking can be optimised.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system 400 may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
**Example 1:** A computer system (160, 180, 400) for coordinating braking between a service brake system (110) and one or more auxiliary braking systems (120, 130, 140) of a vehicle (100), the computer system (160, 400) comprising processing circuitry (170, 402) configured to: receive a braking force value (220) based on the position (210) of a brake pedal (150) of the vehicle (100), the braking force value (220) comprising a braking force currently applied by the service brake system (110) or a requested braking force for the service brake system (110); acquire a braking capability (230) of the one or more auxiliary braking systems (120, 130, 140); determine a respective braking control input (240a, 240b) for each of the service brake system (110) and the one or more auxiliary braking systems (120, 130, 140) based on the acquired braking capability (230) and the received braking force value (220), such that a resultant braking force applied by the service brake system (110) based on the respective determined braking control input (240a, 240b) is less than or equal to the received braking force value (220); and transmit the respective control inputs (240a, 240b) to each of the service brake system (110) and the one or more auxiliary braking systems (120, 130, 140).
**Example 2:** The computer system (160, 180, 400) of example 1, wherein the processing circuitry (170, 402) is configured to receive the braking force value (220) from a controller (110a) of the service brake system (110).
**Example 3:** The computer system (160, 180, 400) of example 1 or 2, wherein the processing circuitry (170, 402) is configured to acquire each braking capability (230) from a controller (120a, 130a, 140a) of each of the one or more auxiliary braking systems (120, 130, 140).
**Example 4:** The computer system (160, 180, 400) of any preceding example, wherein the processing circuitry (170, 402) is further configured to determine the respective braking control inputs (240a, 240b) such that a total resultant braking force applied by the service brake system (110) and the one or more auxiliary braking systems (120, 130, 140) based on the determined braking control inputs (240a, 240b) is equal to the received braking force value (220).
**Example 5:** The computer system (160, 180, 400) of example 1 to 3, wherein the processing circuitry (170, 402) is further configured to determine the respective braking control inputs (240a, 240b) such that a total resultant braking force applied by the service brake system (110) and the one or more auxiliary braking systems (120, 130, 140) based on the determined braking control inputs (240a, 240b) is less or more than the received braking force value (220).
**Example 6:** The computer system (160, 180, 400) of any preceding example 1, wherein the processing circuitry (170, 402) is further configured to determine the respective braking control inputs (240a, 240b) based on acquired input from a system (190) for automated or assisted driving.
**Example 7:** The computer system (160, 180, 400) of any preceding example, wherein the processing circuitry (170, 402) is further configured to determine the respective braking control inputs (240a, 240b) based on acquired parameters relating to vehicle stability, brake conditions and/or predicted brake actuator response.
**Example 8:** The computer system (160, 180, 400) of any preceding example, wherein the processing circuitry (170, 402) is further configured to determine the respective braking control inputs (240a, 240b) based on a minimum braking force requirement for the service brake system (110).
**Example 9:** The computer system (160, 180, 400) of example 8, wherein the processing circuitry (170, 402) is further configured to implement the minimum braking force requirement for the service brake system (110) by applying a limit to the braking capability (230) of the one or more auxiliary braking systems (120, 130, 140).
**Example 10:** The computer system (160, 180, 400) of any preceding example, wherein the processing circuitry (170, 402) is further configured to: receive the braking capability (230) as a negative value and determine the braking control inputs (240a, 240b) by adding the negative value to the received braking force value (220); and/or receive the braking capability (230) as a positive value and determine the braking control inputs (240a, 240b) by subtracting the positive value from the received braking force value (220).
**Example 11:** The computer system (160, 180, 400) of any preceding example, wherein the one or more auxiliary braking systems (120, 130, 140) comprises a regenerative braking system (120), an engine brake system (130), and/or a retarder brake system (140).
**Example 12:** A vehicle (100) comprising the computer system (160, 180, 400) of any preceding example.
**Example 13:** A computer-implemented method (300) for coordinating braking between a service brake system (110) and one or more auxiliary braking systems (120, 130, 140) of a vehicle (100), the method (400) comprising: receiving (302), by processing circuitry (170, 402) of a computer system (160, 180, 400), a braking force value (220) based on the position (210) of a brake pedal (150) of the vehicle (100), the braking force value (220) comprising a braking force currently applied by the service brake system (110) or a requested braking force for the service brake system (110); acquiring (304), by the processing circuitry (170, 402), a braking capability (230) of the one or more auxiliary braking systems (120, 130, 140); determining (306), by the processing circuitry (170, 402), a respective braking control input (240a, 240b) for each of the service brake system (110) and the one or more auxiliary braking systems (120, 130, 140) based on the acquired braking capability (230) and the received braking force value (220), such that a resultant braking force applied by the service brake system (110) based on the respective determined control input (240a, 240b) is less than or equal to the received braking force value (220); and transmitting (308), by the processing circuitry (170, 402), the respective control inputs (240a, 240b) to each of the service brake system (110) and the one or more auxiliary braking systems (120, 130, 140).
**Example 14:** The computer-implemented method (300) of example 13, the method comprising receiving, by the processing circuitry (170, 402), the braking force value (220) from a controller (110a) of the service brake system (110).
**Example 15:** The computer-implemented method (300) of example 13 or 14, the method comprising acquiring, by the processing circuitry (170, 402), each braking capability (230) from a controller (120a, 130a, 140a) of each of the one or more auxiliary braking systems (120, 130, 140).
**Example 16:** The computer-implemented method (300) of example 13 to 15, the method further comprising determining, by the processing circuitry (170, 402), the respective braking control inputs (240a, 240b) such that a total resultant braking force applied by the service brake system (110) and the one or more auxiliary braking systems (120, 130, 140) based on the determined braking control inputs (240a, 240b) is equal to the received braking force value (220).
**Example 17:** The computer-implemented method (300) of example 13 to 15, the method further comprising determining, by the processing circuitry (170, 402), the respective braking control inputs (240a, 240b) such that a total resultant braking force applied by the service brake system (110) and the one or more auxiliary braking systems (120, 130, 140) based on the determined braking control inputs (240a, 240b) is less or more than the received braking force value (220).
**Example 18:** The computer-implemented method (300) of example 13 to 17, the method further comprising determining, by the processing circuitry (170, 402), the respective braking control inputs (240a, 240b) based on acquired input from a system (160, 180) for automated or assisted driving.
**Example 19:** The computer-implemented method (300) of example 13 to 18, the method further comprising determining, by the processing circuitry (170, 402), the respective braking control inputs (240a, 240b) based on acquired parameters relating to vehicle stability, brake conditions and/or predicted brake actuator response.
**Example 20:** The computer-implemented method (300) of example 13 to 19, the method further comprising determining, by the processing circuitry (170, 402), the respective braking control inputs (240a, 240b) based on a minimum braking force requirement for the service brake system (110).
**Example 21:** The computer-implemented method (300) of example 20, the method further comprising implementing, by the processing circuitry (170, 402), the minimum braking force requirement for the service brake system (110) by applying a limit to the braking capability (230) of the one or more auxiliary braking systems (120, 130, 140).
**Example 22:** The computer-implemented method (300) of example 13 to 21, the method further comprising receiving, by the processing circuitry (170, 402), the braking capability (230) as a negative value and determining the braking control inputs (240a, 240b) by adding the negative value to the received braking force value (220); and/or receiving, by the processing circuitry, the braking capability (230) as a positive value and determining the braking control inputs (240a, 240b) by subtracting the positive value from the received braking force value (220).
**Example 23:** The computer-implemented method (300) of example 13 to 22, wherein the one or more auxiliary braking systems (120, 130, 140) comprises a regenerative braking system (120), an engine brake system (130), and/or a retarder brake system (140).
**Example 24:** A computer program product comprising program code for performing, when executed by the processing circuitry (170, 402), the computer-implemented method (300) of example 13 to 23.
**Example 25:** A non-transitory computer-readable storage medium comprising instructions, which when executed by the processing circuitry (170, 402), cause the processing circuitry (170, 402) to perform the computer-implemented method (300) of example 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (160, 180, 400) for coordinating braking between a service brake system (110) and one or more auxiliary braking systems (120, 130, 140) of a vehicle (100), the computer system (160, 400) comprising processing circuitry (170, 402) configured to:
receive a braking force value (220) based on the position (210) of a brake pedal (150) of the vehicle (100), the braking force value (220) comprising a braking force currently applied (220a) by the service brake system (110) or a requested braking force (220b) for the service brake system (110);
acquire a braking capability (230) of the one or more auxiliary braking systems (120, 130, 140);
determine a respective braking control input (240a, 240b) for each of the service brake system (110) and the one or more auxiliary braking systems (120, 130, 140) based on the acquired braking capability (230) and the received braking force value (220), such that a resultant braking force applied by the service brake system (110) based on the respective determined braking control input (240a, 240b) is less than or equal to the received braking force value (220); and
transmit the respective control inputs (240a, 240b) to each of the service brake system (110) and the one or more auxiliary braking systems (120, 130, 140).

2. The computer system of any claim 1, wherein the processing circuitry (170, 402) is configured to receive the braking force value (220) from a controller (110a) of the service brake system (110).

3. The computer system of claim 1 or 2, wherein the processing circuitry (170, 402) is configured to acquire each braking capability (230) from a controller (120a, 130a, 140a) of each of the one or more auxiliary braking systems (120, 130, 140).

4. The computer system of any preceding claim, wherein the processing circuitry (170, 402) is further configured to determine the respective braking control inputs (240a, 240b) such that a total resultant braking force applied by the service brake system (110) and the one or more auxiliary braking systems (120, 130, 140) based on the determined braking control inputs (240a, 240b) is equal to the received braking force value (220).

5. The computer system of claims 1 to 3, wherein the processing circuitry (170, 402) is further configured to determine the respective braking control inputs (240a, 240b) such that a total resultant braking force applied by the service brake system (110) and the one or more auxiliary braking systems (120, 130, 140) based on the determined braking control inputs (240a, 240b) is less or more than the received braking force value (220).

6. The computer system of any preceding claim, wherein the processing circuitry (170, 402) is further configured to determine the respective braking control inputs (240a, 240b) based on acquired input from a system (160, 180) for automated or assisted driving.

7. The computer system of any preceding claim, wherein the processing circuitry (170, 402) is further configured to determine the respective braking control inputs (240a, 240b) based on acquired parameters relating to vehicle stability, brake conditions and/or predicted brake actuator response.

8. The computer system of any preceding claim wherein the processing circuitry (170, 402) is further configured to determine the respective braking control inputs (240a, 240b) based on a minimum braking force requirement for the service brake system (110).

9. The computer system of claim 8, wherein the processing circuitry (170, 402) is further configured to implement the minimum braking force requirement for the service brake system (110) by applying a limit to the braking capability (230) of the one or more auxiliary braking systems (120, 130, 140).

10. The computer system of any preceding claim, wherein the processing circuitry (170, 402) is further configured to:
receive the braking capability (230) as a negative value and determine the braking control inputs (240a, 240b) by adding the negative value to the received braking force value (220); and/or
receive the braking capability (230) as a positive value and determine the braking control inputs (240a, 240b) by subtracting the positive value from the received braking force value (220).

11. The computer system of any preceding claim, wherein the one or more auxiliary braking systems (120, 130, 140) comprises a regenerative braking system (120), an engine brake system (130), and/or a retarder brake system (140).

12. A vehicle (100) comprising the computer system (160, 180, 400) of any preceding claim.

13. A computer-implemented method (300) for coordinating braking between a service brake system (110) and one or more auxiliary braking systems (120, 130, 140) of a vehicle (100), the method (400) comprising:
receiving (302), by processing circuitry (170, 402) of a computer system (160, 180, 400), a braking force value (220) based on the position (210) of a brake pedal (150) of the vehicle (100), the braking force value (220) comprising a braking force currently applied (220a) by the service brake system (110) or a requested braking force (220b) for the service brake system (110);
acquiring (304), by the processing circuitry (170, 402), a braking capability (230) of the one or more auxiliary braking systems (120, 130, 140);
determining (306), by the processing circuitry (170, 402), a respective braking control input (240a, 240b) for each of the service brake system (110) and the one or more auxiliary braking systems (120, 130, 140) based on the acquired braking capability (230) and the received braking force value (220), such that a resultant braking force applied by the service brake system (110) based on the respective determined control input (240a, 240b) is less than or equal to the received braking force value (220); and
transmitting (308), by the processing circuitry (170, 402), the respective control inputs (240a, 240b) to each of the service brake system (110) and the one or more auxiliary braking systems (120, 130, 140).

14. A computer program product comprising program code for performing, when executed by the processing circuitry (170, 402), the computer-implemented method (300) of claim 13.

15. A non-transitory computer-readable storage medium comprising instructions, which when executed by the processing circuitry (170, 402), cause the processing circuitry (170, 402) to perform the computer-implemented method (300) of claim 13.
